# EUROPÄISCHE PATENTSCHRIFT

(11) **EP 1 433 553 B1**
(45) Veröffentlichungstag und Bekanntmachung des Hinweises auf die Patenterteilung: **16.08.2006**
(21) Anmeldenummer: 03028802.1
(22) Anmeldetag: 15.12.2003
(51) Int. Cl.: B22F 1/00, C22C 1/10

(54) **Verfahren zur Herstellung von Verbundwerkstoffen**
Method for manufacture of composite material
Procédé pour la fabrication d'un matériau composite

(30) Priorität: 20.12.2002 DE 10259993
(43) Veröffentlichungstag der Anmeldung: 30.06.2004
(73) Patentinhaber: CeramTec AG, 73207 Plochingen (DE)
(72) Erfinder: Rogowski, Dirk, 73061 Ebersbach a.d.Fils (DE); Lenke, Ilka, Dr., 73207 Plochingen (DE); Theil, Dieter, 73728 Esslingen/N (DE)
(74) Vertreter: Uppena, Franz

(56) Entgegenhaltungen:
- WO-A-02/29139
- DE-C- 19 708 402
- US-A- 5 511 603
- US-B1- 6 180 258
- V.V. STOLYAROVE ET AL: "Processing nanocrystalline Ti and its nanocomposites from micrometer-sized Ti powder using high presssure torsion" MATERIALS SCIENCE AND ENGINEERING A, Bd. A282, 2000, Seiten 78-85, XP002270015 Elsevier Science
- H. FERKEL ET AL: "Magnesium strengthened by SiC nanoparticles" MATERIALS SCIENCE AND ENGINEERING A, Bd. A298, 2001, Seiten 193-199, XP002270016 Elsevier Science

## Beschreibung

Die Erfindung betrifft ein Verfahren zur Herstellung von Verbundwerkstoffen.

Mit Verbundwerkstoff werden hier insbesondere jene Werkstoffe bezeichnet, die ein Metall als eine Komponente enthalten, unabhängig vom prozentualen Anteil. Als Metall-Matrix-Verbundwerkstoff, Metal-Matrix-Composite (MMC), wird ein Verbund einer Metallmatrix mit einer oder mehreren eingelagerten Sekundärphasen bezeichnet. Im strengen Sinn zählen zu den MMCs nur Verbundwerkstoffe mit einem Metallanteil ≥ 50 Vol%. Verbundwerkstoffe mit geringeren Metallanteilen werden beispielsweise als Keramik-Matrix-Verbundwerkstoff, Ceramic-Matrix-Composite (CMC), bezeichnet. Diese Unterscheidung wird aber im allgemeinen nicht immer konsequent durchgeführt.

Als Sekundärphase werden im Folgenden alle die Teilchen oder Fasern bezeichnet, die eine andere Zusammensetzung haben wie die Metallmatrix und in diese eingelagert sind. Entsprechend wird deshalb auch der Begriff Einlagerungsphase verwendet. Nicht gemeint sind hierbei die Ausscheidungsphasen bei Legierungen.

Als Metallmatrix kommen die Metalle aus der Gruppe der sogenannten Leichtmetalle Aluminium, Magnesium oder Titan sowie deren Legierungen in Frage. Mit diesen Leichtmetallen können gegenüber den herkömmlichen Konstruktionswerkstoffen wie beispielsweise Gusseisen oder Stahl deutliche Gewichtsvorteile erreicht werden, wobei die eventuell auftretenden Nachteile bezüglich mechanischer, tribologischer oder thermischer Eigenschaften durch homogene Einlagerung weiterer Phasen in die Metallmatrix teilweise oder vollständig kompensiert werden können.

Als Einlagerungsphasen sind Elemente und Verbindungen möglich, die auf Grund ihrer Werkstoffkenngrößen dazu geeignet sind, einzelne Eigenschaften der Metallmatrix zu verbessern. Dies kann eine Verbesserung der mechanischen Eigenschaften sein wie beispielsweise der Festigkeit, der Tribologie, der Verschleißbeständigkeit oder des E-Moduls. In anderen Fällen kann eine Verbesserung der thermischen Eigenschaften wie beispielsweise eine Erhöhung der Wärmeleitfähigkeit oder Erniedrigung der thermischen Ausdehnung erreicht werden. Weiterhin haben Verbundwerkstoffe aufgrund ihrer Zusammensetzung positive akustische Eigenschaften bezüglich der Verminderung von Schallerzeugung und der Leitung des Schalls.

Die homogene Verteilung der Sekundärphasen in der Metallmatrix kann entweder durch in-situ-Bildung während des Herstellprozesses erfolgen, durch Zumischen der Sekundärphase zum schmelzflüssigen Metall oder durch die Infiltration eines porösen Formkörpers, einer sogenannten Preform, die aus der Sekundärphase besteht, mit der Metallschmelze. Die Einlagerungsphasen können als Teilchen, als Fasern oder als Mischung beider in der Preform und/oder später im Verbund vorliegen.

Zur Herstellung von Verbundwerkstoffen wird aufgrund folgender Vorteile die Preformtechnik bevorzugt:

Das Formgebungsverfahren der Preform ist unabhängig von der Formgebung des Bauteils.

Die Formgebung der Preform erfolgt nach gängigen pulvertechnologischen Verfahren wie beispielsweise axiales Pressen, isostatisches Pressen, Schlickerguss, Filtrationsguss, Extrudieren.

Es ist eine konturnahe Formgebung des Verbundwerkstoffes möglich.

Eine lokale Begrenzung des Verbundwerkstoffs auf die Funktionsbereiche des Werkstücks ist möglich.

Es entsteht eine monolithische Verbindung eines lokalen Verbundwerkstoffs mit dem übrigen Bauteil.

Die Kombinationen verschiedener Verbundwerkstoffe in einem Bauteil ist möglich.

Bei Bedarf besteht die Möglichkeit der anisotropen Orientierung der Sekundärphase im Verbund, wodurch insbesondere bei dem Einsatz von Fasern die Bauteileigenschaften gezielt beeinflusst werden können.

Die Herstellung von Gradientenwerkstoffen ist möglich.

Die Zusammensetzung eines Verbundwerkstoffs ist reproduzierbar.

Die folgenden Verfahrensschritte zur Herstellung eines Verbundwerkstoffs haben ebenfalls Einfluss auf seine Qualität:

### Die Porosierung:

Zur Porosierung der Preform können temporäre Füllstoffe eingesetzt werden, das heißt Stoffe, die durch einen thermischen, chemischen oder physikalischen Prozessschritt wieder aus der Preform entfernt werden. Dabei entsteht eine Porenstruktur, die bezüglich Anteil, Größenverteilung und Form dem Porosierungsmittel entspricht. Als Porosierungsmittel werden beispielsweise natürliche oder synthetische organische Pulver eingesetzt. Es können für bestimmte Anwendungsfälle auch Fasern eingesetzt werden.

### Die Infiltration:

Zur Herstellung eines Verbundwerkstoffes nach der Preformtechnik wird die poröse Preform mit einer Metallschmelze infiltriert. Hierzu sind bekannte Formgebungsverfahren für Metalle geeignet wie beispielsweise das Squeeze-Casting oder der Druckguss. Es gibt auch speziell für die Preforminfiltration konzipierte Verfahren wie beispielsweise das Direct-Press-Squeeze-Casting oder die Gasdruckinfiltration.

### Gesteuerte Reaktionen während der Infiltration:

Während der Infiltration einer porösen Preform mit einer Metallschmelze können, je nach Wahl des Preformmaterials und der Metalllegierung, werkstoffbeeinflussende Reaktionen stattfinden, die zur chemischen Umwandlung der Verbundzusammensetzung und/oder Veränderung der Verbundeigenschaften herangezogen werden können. Dazu gehört beispielsweise das i3A-Verfahren, bei dem während der Infiltration Titandioxid in der Preform mit der Aluminiumschmelze reagiert und sich Aluminiumoxid und Titanaluminid bildet. Solche Reaktionen können auch in einem nachgeschalteten separaten Fertigungsschritt initiiert werden.

### Möglichkeiten der Änderung der Eigenschaften der Metallmatrix:

In der Regel werden die Eigenschaften der Metallmatrix durch die eingelagerte Sekundärphase dahin gehend verändert, dass sich je nach Volumenanteil und Art der Sekundärphase die Verbundeigenschaften qualitativ im Bereich zwischen den Eigenschaften der reinen Metallphase und denen der reinen Sekundärphase verschieben lassen.

Beispielsweise liegt der resultierende thermische Ausdehnungskoeffizient α eines Verbundwerkstoffs aus 50 Vol% Aluminium mit α etwa 24-10⁻⁶ K⁻¹ und 50 Vol% Siliziumcarbidteilchen mit α etwa 4.10⁻⁶ K⁻¹ bei etwa 14·10⁻⁶ K⁻¹.

Für die unterschiedlichsten Anwendungen können in weiten Bereichen Werkstoffe mit den gewünschten Eigenschaften hergestellt werden. Es können die Vorteile der Leichtmetalle mit denen der Einlagerungsphase kombiniert werden und dadurch spezifische Nachteile der eingesetzten Leichtmetalle kompensiert werden.

In folgenden Veröffentlichungen ist der Stand der Technik beschrieben: WO 97/19774, US 4587707, US 4916030, US 5511603, US 6180258.

In der Veröffentlichung von V.V. Stolyarov et al., "Processing nanocrystalline Ti and ist nanocomposites from micrometer-sized Ti powder using high pressure torsion", Materials Science and Engineering A282, 78-85, Elsevier Science S.A., 2000, wird die Herstellung von nanokristallinen Titan-Titandioxid-Zusammensetzungen mittels "high pressure torsion" (HTP) beschrieben.

In der veröffentlichung von H. Ferkel et al., "Magnesium strengthened by SiC nanoparticles", Materials Science and Engineering A298, 193-199, Elsevier Science S.A., 2001, wird die Steigerung der Festigkeit von Magnesium durch die Zugabe von SiC-Nanoteilchen beschrieben.

US-B- 6180258 offenbart eine Al-Matrix mit Oxid-, Carbid-, Borid-, Nitrid-Partikeln.

### Agglomeration:

Die Verarbeitung von nanoskaligen Pulvern ist in der wässrigen Phase als Dispersion nur in starker Verdünnung und mit Dispergierhilfsmitteln möglich, da es sonst zu Agglomeration der Teilchen kommt, wodurch die gewünschten Eigenschaften verloren gehen.

Bei der Verarbeitung von Nanoteilchen als Pulver kommt es neben Problemen beim Handling ebenfalls zu Agglomerationen, und als Folge davon beispielsweise zu Eigenschaftsverschlechterungen durch Gefügefehler im Verbund.

### Formgebung:

Bei der Formgebung der Preforms kann es durch Entmischungsvorgänge, Agglomerationen oder Sedimentationen, zu einer inhomogenen Verteilung der Teilchen in der Preform kommen. Eine solche Entmischung tritt insbesondere bei Teilchen im Nanometerbereich auf. Weiterhin können die Formgebungsverfahren häufig zu lokal unterschiedlicher Verdichtung und damit zu Dichtegradienten führen.

### Porenstruktur:

Die Porenstruktur der Preform wird im Wesentlichen durch die Art der Sekundärphase und des Porosierungsmittels, insbesondere durch die Korngrößenverteilung und die Morphologie, beeinflusst. Hierbei können die Wirkungen bei der Formgebung, der Infiltration und der Größe der Teilchen und Fasern im Verbund gegenläufig sein. Feine Teilchen und Fasern ergeben eine feine Porenstruktur, was positiv für den Verbund sein kann, aber bei der Infiltration Probleme bereitet.

### Vergröberung:

Zum Formgebungsprozess gehört eine Verfestigung der Preform, was bei keramischen Hartstoffen als Sekundärphase in der Regel durch einen Sinterprozess erfolgt. Um eine für das Handling und die Infiltration ausreichende Preformfestigkeit zu erreichen, müssen je nach verwendetem Hartstoff die Temperaturen so hoch gewählt werden, dass es bereits zu einer Vergröberung der Hartstoffteilchen kommt. Dadurch wird beispielsweise die verstärkende Wirkung verringert. Außerdem entsteht ein starres Keramikgerüst, wodurch die Duktilität der Metallmatrix verloren geht. Die Vergröberung der Hartstoffe wird durch die hohe Sinteraktivität feiner Teilchen im Nanometerbereich zusätzlich begünstigt.

### Preformfestigkeit:

Die Kombination von Teilchen bestimmter Korngrößenverteilung und Morphologie mit einem angestrebten Volumenanteil im Verbund führt bei einem geringen Volumenanteil an Teilchen häufig zu einer nur geringen Preformfestigkeit. Die erreichte Preformfestigkeit ist deshalb in der Regel für serienmäßige Infiltrationsverfahren, beispielsweise Druckguss, nicht ausreichend. Es müssen zur vollständigen Infiltration spezielle Verfahren angewendet werden.

### Infiltration:

Wenn die Preforms aus sehr feinen Teilchen und Fasern im Nanometerbereich bestehen, oder einen hohen Volumenanteil an Teilchen oder Fasern enthalten, müssen zur Infiltration mit einer Metallschmelze spezielle Verfahren angewendet werden, um eine vollständige Infiltration zu erreichen. Dazu gehören beispielsweise die Gasdruckinfiltration oder das Direct-Press-Squeeze-Casting. Kostengünstige Großserienverfahren wie beispielsweise der Druckguss sind in der Regel nicht möglich.

### Reaktionen:

Zahlreiche Elemente und Verbindungen müssen als Sekundärphasenmaterialien für die Preformherstellung ausgeschlossen werden, weil sie bei der Infiltration mit der Metallschmelze unerwünschte, undefinierte beziehungsweise unkontrollierte Reaktionen eingehen.

### Bearbeitbarkeit:

Die über die Preforms in den Verbund eingebrachten Sekundärphasen mit ihren gewünschten Eigenschaftsverbesserungen haben häufig auch eine unerwünschte Verschlechterungen der Bearbeitbarkeit zur Folge. Dies kann zu Bearbeitungsfehlern in Form von Rissen oder Ausbrüchen, zu längeren Bearbeitungszeiten, zu einem erhöhten Werkzeugverschleiß und damit zu erhöhten Kosten führen.

### Eigenschaften:

Durch die Einlagerung relativ grober Teilchen der Sekundärphase in die Metallmatrix kann es zur Abnahme positiver und für bestimmte Anwendungen gewünschter Eigenschaften der Metalle kommen, beispielsweise einer Abnahme der Dehnung oder Duktilität. Zur Verschlechterung kann auch das starre Keramikgerüst der Preform beitragen.

Es ist die Aufgabe der Erfindung, durch eine entsprechende Auswahl der Größe und Art der Fasern und/oder der Teilchen der Sekundärphase und/oder der Ausbildung einer speziellen Porenstruktur der Preform die Eigenschaften der Verbundwerkstoffe zu verbessern.

### Die Erfindung nimmt Einfluss auf folgende Parameter:

### Teilchengröße:

Wie bereits dargelegt, hat die Teilchengröße der Teilchen, die als Sekundärphase zur Herstellung eines Verbundwerkstoffes verwendet werden, Einfluss auf die Verbundeigenschaften. Überraschender Weise nimmt bei Verwendung von Teilchen im Nanometerbereich von 5 bis 500 Nanometern, auch als Nanoteilchen oder Nanopartikel bezeichnet, dieser Einfluss gegenüber dem Einfluss der Teilchen im Größenbereich zwischen 1 und 50 Mikrometern exponentiell zu. Voraussetzung ist, dass die Teilchen auch im Verbund noch als separate, nicht agglomerierte Teilchen vorliegen.

Weiterhin wurde gefunden, dass die makroskopischen Eigenschaften der Stoffe, aus denen die Nanoteilchen bestehen, nicht unbedingt mit ihren Wirkungen im Verbund übereinstimmen müssen. Beispielsweise können Nanoteilchen mit relativ geringer eigener Härte wie Titandioxid oder Silikate die Härte eines Verbundwerkstoffs deutlich steigern. Diese als Dispersionsverstärkung bezeichnete Wirkung erfolgt durch die Beeinflussung des Metallgefüges.

Neben der ausschließlichen Nutzung von Nanoteilchen als Sekundärphase mit Anteilen von 20 bis 80 Vol% im Verbund können noch weitere Sekundärphasen in Form von gröberen Teilchen und/oder Fasern gleichzeitig eingesetzt werden.

### Agglomeration:

Um die positiven Wirkungen der Nanoteilchen zu nutzen ist es erforderlich, sie als separate Teilchen zu erhalten und eine Agglomeration zu verhindern. Bei der Erfindung wurde überraschenderweise gefunden, dass durch die definierte Ablagerung von Nanoteilchen auf andere als Träger fungierende Teilchen, weitere Sekundärphasen oder Porosierungsmittel, die Verarbeitung sogar als Pulver möglich ist, ohne das es zu ungewollten Agglomerationen kommt.

### Formgebung:

Zur Vermeidung von Entmischungsvorgängen zwischen Sekundärphase und Porosierungsmittel werden die Nanoteilchen der Sekundärphase entweder direkt auf dem vorgeformten Porosierungsmittel abgeschieden oder in der Preform gebildet, beispielsweise über einen Sol-Gel-Prozess. Das führt direkt zu einer Preform, die Nanoteilchen enthält.

Weiterhin lassen sich vorbehandelte Nanoteilchen sowohl auf anderen Nanoteilchen als auch auf oder in dem Porosierungsmittel fixieren. Hierzu ist beispielsweise die Sprühgranulation über einen Atomizer geeignet oder ein Verfahren zur Trockenmischung und/oder Aufbaugranulation, beispielsweise mittels Granuliertrommel, Wirbelschicht und ähnlichem. Durch geeignete Wahl der Abfolge der Komponentenzugabe und Hilfsstoffe sowie der thermischen und mechanischen Randbedingungen wird ein Granulat erhalten, das sich mit üblichen trockenen Formgebungsverfahren verarbeiten lässt.

Das Granulierverfahren erzeugt ein negatives Abbild des Porosierungsmittels und damit der Porenstruktur in Form der Nanoteilchen der Sekundärphase. Die Struktur der Sekundärphase ist reziprok, aber ebenso fraktal (selbstähnlich) aufgebaut wie die Porenstruktur.

### Porenstruktur:

Für die Infiltration von Preforms wurde eine multimodale Porenstruktur entwickelt. Darunter ist ein baumartiger Aufbau der Porenkanäle zu verstehen. Dieser spiegelt sich nach der Infiltration im Verbund in der Struktur des Metallgefüges wieder. Im mikroskopischen Bereich entsteht eine fraktale (selbstähnliche) Struktur über mehrere Größenordnungen. Dadurch kann der Infiltrationswiderstand aufgrund ansonsten zu enger Porenkanäle deutlich verringert werden. Trotzdem bilden sich nicht so viele grobe metallgefüllte Poren, dass dadurch die Verbundeigenschaften verschlechtert werden. Das Verfahren ermöglicht sogar Preforms mit kleinen Teilchen bis in den Nanometerbereich und hohen Feststoffanteilen, die sogar noch mittels Druckguss infiltrierbar sind.

Die Porenstruktur entsteht zum einen aus temporären organischen Porosierungsmitteln, die während eines speziellen Prozessschrittes aus der Preform entfernt werden und dabei bezüglich Menge, Größe und Form entsprechende Poren hinterlassen. Zum anderen werden durch den Formgebungsprozess über das verarbeitete Granulat Poren in die Preform eingebracht.

Es ist deshalb wichtig, das eingesetzte Porosierungsmittel und die Herstellung des Granulats so aufeinander abzustimmen, dass die gewünschte multimodale Porenstruktur entsteht. Es ist vorteilhaft, als Porosierungsmittel eine Mischung verschiedener Stoffe mit unterschiedlicher Größenverteilung, Form und Struktur zu verwenden. Geeignet sind natürliche organische Stoffe wie beispielsweise Stärken, Cellulose und andere pflanzliche Stoffe mit Teilchengrößen zwischen 1 und 500 Mikrometern. Aber auch synthetische Stoffe wie beispielsweise Wachse und andere Polymere mit passender Struktur sind geeignet.

### Vergröberung:

Durch die Abscheidung eines anorganischen Binders bei der Formgebung, beispielsweise über einen Sol-Gel-Prozess, auf die Teilchen der Sekundärphase und/oder dem Porosierungsmittel erfolgt eine ausreichende Verfestigung der Preform bereits bei deutlich niedrigeren Temperaturen als 1000°C und eine Vergröberung, insbesondere der reaktiven Nanoteilchen, findet noch nicht statt.

### Preformfestigkeit:

Die bereits erwähnte Verfestigung der Preform nach dem Formgebungsprozess durch eine Temperaturbehandlung erfolgt bei vielen Hartstoffen durch Ausbildung von Brücken zwischen den Partikeln. Dies geschieht zunächst dort, wo sich Teilchen bereits berühren.

Durch Zusatz von Teilchen mit Größenordnungen im Nanometerbereich kann die Anzahl der Berührpunkte deutlich gesteigert werden. Außerdem sind die Nanoteilchen reaktiver, so dass die Ausbildung der Brücken bereits bei niedrigeren Temperaturen erfolgt. Durch die hohe Zahl der Kontaktstellen bilden sich nur dünnere Brücken. Dadurch steigert sich die Duktilität und die Dehnfähigkeit des Verbundmaterials.

### Infiltration:

Erfindungsgemäß hergestellte Preforms sind auf Grund ihrer fraktalen baumartigen Porenstruktur und Anordnung der Hartstoffteilchen oder Fasern auch in Serienverfahren wie beispielsweise dem Squeeze-Casting oder Druckguss infiltrierbar.

### Reaktionen:

Durch eine Vorbehandlung der Nanoteilchen lässt sich das Verbundgefüge beeinflussen und lassen sich Reaktionen mit der Metallmatrix während der Infiltration oder während eines nachgeschalteten Prozessschritts gezielt steuern, d.h. initiieren oder unterdrücken.

### Bearbeitbarkeit:

Die erfindungsgemäße Verwendung von Nanoteilchen ermöglicht eine Eigenschaftsverbesserung des Verbundwerkstoffs auch schon mit geringen Volumenanteilen an Sekundärphasen. Eine Festigkeitssteigerung kann bereits mit weniger harten Stoffen erreicht werden, beispielsweise Titandioxid, so dass die Bearbeitbarkeit wesentlich leichter ist als bei herkömmlichen Verbundwerkstoffen.

### Eigenschaften:

Durch die Kombination von geringer Teilchengröße, der erzeugten Porenstruktur, der Gefügestruktur im Verbund und spezieller Bindung der Teilchen in der Preform lassen sich die bei der Verwendung gröberer Teilchen auftretenden Nachteile der Verbundwerkstoffe wesentlich herabsetzen. Die Abnahme positiver metallischer Eigenschaften ist gering, die Bearbeitbarkeit gut.

### Vorteile der Erfindung:

Durch die Teilchengröße im Nanometerbereich, 5 bis 500 Nanometer, lassen sich die Eigenschaften der Verbundwerkstoffe wesentlich verbessern und die bei gröberen Teilchen auftretenden Nachteile minimieren. Es sind deutlich geringere Mengen von Teilchen im Nanometerbereich notwendig, um die gleiche Wirkung wie mit gröberen Teilchen im herkömmlichen Bereich von 1 bis 50 Mikrometern zu erreichen, beispielsweise die Steigerung der Härte mit Stoffen relativ geringerer Härte.

Durch die erfindungsgemäß durchgeführte Vorbehandlung der Teilchen lässt sich das Verbundgefüge beeinflussen. Die Einbindung der Sekundärphase in die Metallmatrix kann eingestellt werden. Außerdem lassen sich Reaktionen der Sekundärphase mit der Metallmatrix während der Infiltration oder während eines nachgeschalteten Prozessschritts gezielt steuern, initiieren oder unterdrücken.

Durch die erfindungsgemäße Porenkanalstruktur der Preform in Form einer Baumstruktur lassen sich auch bei ungünstiger Kombination von Teilchengrößen-Verteilung, -form und Volumenanteil die Infiltrationswiderstände reduzieren. So können zur Infiltration mit Metallschmelzen herkömmliche Großserienverfahren, beispielsweise Druckguss, angewendet werden.

Anhand von Ausführungsbeispielen wird die Erfindung näher erläutert:

### Beispiel 1: (nicht Teil der Erfindung)

| | |
|---|---|
| 36,0 wt% | Al₂O₃, nanoskaliges Pulver |
| 5,0 wt% | Cellulosepulver |
| 5,0 wt% | Stärkepulver |
| 3,5 wt% | Dispergierhilfsmittel |
| 0,5 wt% | organisches Bindemittel |
| 50,0 wt% | Wasser |

Die Komponenten wurden in einer Rotationsmühle mit der gleichen Gewichtsmenge Mahlkugeln aus Keramik, Durchmesser 12 mm, zusammengegeben, so dass die Mühle zu etwa. 50 % gefüllt war und 3 h gemahlen.

Der resultierende Schlicker wurde auf Metallplatten in Schichten von etwa 5 mm ausgegossen, eingefroren und anschließend gefriergetrocknet. Die trockene Mischung wurde durch ein Sieb mit 630 µm Maschenweite passiert, um ein homogenes, feines Pulver zu erhalten.

Zur Formgebung wurden 120 g des Pulvers in einer Form mit den Maßen 125 mm x 60 mm bei 100 MPa axial verpresst. Es entstand eine Platte der oben genannten Abmessung mit einer Höhe von etwa 10 mm und einer Dichte von 1,63 g/cm³.

Die Platte wurde mit etwa 100 K/h in Luft auf 600 °C aufgeheizt, 1 h bei 600 °C gehalten und danach abgekühlt. Die erhaltene Platte hatte eine Dichte von 1,16 g/cm³, was einer Porosität von etwa 70 % entsprach. Die Platte war fest, sie ließ sich in kleine Teile zersägen.

Diese Teile wurden auf etwa 600 °C aufgeheizt, in eine passende Metallform gelegt und in einem Squeeze-Casting-Prozess mit Aluminium infiltriert. Es entstand ein Verbundwerkstoff aus Aluminium mit einem Anteil von etwa 30 Vol% nanoskaligen Al₂O₃-Teilchen.

### Beispiel 2:

| | |
|---|---|
| 43,5 wt% | Al₂O₃, nanoskaliges Pulver |
| 2,5 wt% | Cellulosepulver |
| 2,5 wt% | Stärkepulver |
| 0,7 wt% | Dispergierhilfsmittel |
| 0,8 wt% | organisches Bindemittel |
| 50,0 wt% | Wasser |

Das Wasser wurde in einem Behälter vorgelegt und die übrigen Komponenten mit einem schnelllaufenden Rührer homogen darin gelöst beziehungsweise dispergiert. Anschließend wurde der Schlicker über einen Atomizer zu einem Granulat sprühgetrocknet.

Zur Formgebung können beispielsweise 6000 g des Granulats in einer Form mit den Maßen 400 mm x 250 mm bei 100 MPa axial verpresst werden. Es resultiert eine Platte der obengenannten Abmessung mit einer Höhe von etwa 30 mm und einer Dichte von 2,01 g/cm³.

Die Platte wurde mit etwa 50 K/h in Luft auf 800 °C aufgeheizt, 1 h bei 800 °C gehalten und danach abgekühlt. Die erhaltene Platte hatte eine Dichte von 1,68 g/cm³, was einer Porosität von etwa 58 % entspricht. Die Platte war fest, sie ließ sich in kleine Teile zersägen.

Diese Teile wurden auf etwa 700 °C aufgeheizt, in eine passende Metallform gelegt und in einem Druckguss-Prozess mit Aluminium infiltriert. Es entstand ein Verbundwerkstoff aus Aluminium mit einem Anteil von etwa 42 Vol% nanoskaligen Al₂O₃-Teilchen.

### Beispiel 3:

| | |
|---|---|
| 43,5 wt% | Al₂O₃, nanoskaliges Pulver |
| 3,3 wt% | Cellulosepulver |
| 1,7 wt% | Ligninpulver |
| 0,7 wt% | Dispergierhilfsmittel |
| 0,8 wt% | organisches Bindemittel |
| 50,0 wt% | Wasser |

Aufbereitung, Formgebung und Verfestigung erfolgte wie bei Beispiel 2. Es entstand eine Platte mit einer Pressdichte von 1,99 g/cm³ und einer Enddichte von 1,65 g/cm³, was einer Porosität von etwa 59 % entspricht.

Die aus dieser Platte gesägten Teile wurden auf etwa. 700 °C aufgeheizt, in eine passende Metallform gelegt und in einem Druckguss-Prozess mit Aluminium infiltriert. Es entstand ein Verbundwerkstoff aus Aluminium mit einem Anteil von etwa 41 Vol% nanoskaligen Al₂O₃-Teilchen.

Bei der Charakterisierung der mechanischen Eigenschaften dieses Verbundwerkstoffs in Beispiel 3 ergaben sich 4-Punkt-Biegefestigkeiten von über 650 MPa und Dehnungswerte von über 0,7 %.

### Beispiel 4:

6000 g eines gemäß Beispiel 3 hergestellten Granulats wurde zur Formgebung in einer Form mit den Maßen 400 mm x 250 mm bei 100 MPa axial verpresst. Es entstand eine Platte der obengenannten Abmessung mit einer Höhe von etwa 30 mm und einer Dichte von 2,01 g/cm³.

Die Platte wurde mit etwa 50 K/h in Luft auf 600 °C aufgeheizt, 1 h bei 600 °C gehalten und danach abgekühlt. Die niedrige Sintertemperatur wurde gewählt, um eine Vergröberung und zu starke Versinterung der nanoskaligen Teilchen zu minimieren. Die erhaltene Platte hatte eine Dichte von 1,59 g/cm³, was einer Porosität von etwa 60 % entspricht. Die Platte war auf Grund der niedrigen Sintertemperatur für ein problemloses Handling und einen Infiltrationsprozess noch nicht ausreichend fest.

Die Preform wurde über einen Sol-Gel-Prozess mit einer alkalischen kolloidalen Lösung von Titanoxidhydroxid (TiO(OH)₂ imprägniert, anschließend getrocknet und einer Temperaturbehandlung bei 600 °C unterzogen. Danach hatte die Platte eine ausreichende Festigkeit, ließ sich in kleinere Teile zersägen und wie in Beispiel 2 und 3 infiltrieren.

### Beispiel 5:

| | |
|---|---|
| 34,5 wt% | TiO₂, mikroskaliges Pulver |
| 10,0 wt% | TiO₂, nanoskaliges Pulver |
| 3,0 wt% | Cellulosepulver |
| 1,5 wt% | Ligninpulver |
| 0,2 wt% | Dispergierhilfsmittel |
| 0,8 wt% | organisches Bindemittel |
| 50,0 wt% | Wasser |

Das Wasser wurde in einem Behälter vorgelegt und die übrigen Komponenten mit einem schnelllaufenden Rührer homogen darin gelöst beziehungsweise dispergiert. Anschließend wurde der Schlicker über einen Atomizer zu einem Granulat sprühgetrocknet.

Zur Formgebung wurden 6000 g des Granulats in einer Form mit den Maßen 400 mm x 250 mm bei 100 MPa axial verpresst werden. Es entstand eine Platte der obengenannten Abmessung mit einer Höhe von etwa 30 mm und einer Dichte von 1,91 g/cm³.

Die Platte wurde mit etwa 50 K/h in Luft auf 1100 °C aufgeheizt, 1 h bei 1100 °C gehalten und danach abgekühlt. Die erhaltene Platte hatte eine Dichte von 1,83 g/cm³, was einer Porosität von etwa 57 % entspricht. Die Platte war fest, ließ sich in kleine Teile zersägen und wie in Beispiel 2 und 3 infiltrieren.

### Beispiel 6:

| | |
|---|---|
| 33,5 wt% | TiO₂, mikroskaliges Pulver |
| 10,0 wt% | TiO₂, nanoskaliges Pulver |
| 3,0 wt% | Cellulosepulver |
| 1,5 wt% | Ligninpulver |
| 0,2 wt% | Dispergierhilfsmittel |
| 0,8 wt% | organisches Bindemittel |
| 1,0 wt% | Kupfersulfat-Hydrat |
| 50,0 wt% | Wasser |

Das Wasser wurde in einem Behälter vorgelegt und die übrigen Komponenten mit einem schnelllaufenden Rührer homogen darin gelöst beziehungsweise dispergiert. Anschließend wurde der Schlicker über einen Atomizer zu einem Granulat sprühgetrocknet.

Der Zusatz des Kupfersulfat-Hydrats dient der Vorbehandlung bzw. Beschichtung des Titandioxids, um die Aktivität beim Sintern und Infiltrieren zu erhöhen.

Zur Formgebung wurden 6000 g des Granulats in einer Form mit den Maßen 400 mm x 250 mm bei 100 MPa axial verpresst werden. Es resultiert eine Platte der obengenannten Abmessung mit einer Höhe von etwa 30 mm und einer Dichte von 1,90 g/cm³.

Die Platte wurde mit etwa 50 K/h in Luft auf 800 °C aufgeheizt, 1 h bei 800 °C gehalten und danach abgekühlt. Durch den Zusatz von Kupfersulfat-Hydrat hatte die erhaltene Platte erstaunlicherweise trotz der gegenüber Beispiel 5 um 300 K niedrigeren Sintertemperatur eine Dichte von 1,86 g/cm³, was einer Porosität von etwa 56 % entspricht. Die Platte war genauso fest wie in Beispiel 5, ließ sich in kleine Teile zersägen und wie in Beispiel 2 und 3 infiltrieren.

## Patentansprüche

1. Verfahren zur Herstellung eines Verbundwerkstoffs zur Herstellung von Formkörpern, wobei in einer Matrix aus den Metallen Aluminium, Magnesium, Titan sowie deren Legierungen mit anderen Metallen eine oder mehrere Sekundärphasen aus Metallen, Oxiden, Carbiden, Boriden, Nitriden, Siliziden sowie Kombinationen daraus eingelagert werden, wobei die Teilchengröße mindestens einer Sekundärphase im Bereich von 5 bis 500 Nanometer liegt und wobei eine Ablagerung der Sekundärphase als Teilchen im Nanometerbereich auf einer gröberen Sekundärphase und/oder dem Porosierungsmittel mittels Sprühgranulation erfolgt.

2. Verfahren nach Anspruch 1, **dadurch gekennzeichnet, dass** zusätzlich mindestens eine Sekundärphase aus Teilchen im herkömmlichen Größenbereich, 1 bis 50 µm, zugegeben wird.

3. Verfahren nach Anspruch 1 oder 2, **dadurch gekennzeichnet, dass** ein Anteil von 20 bis 80 Vol% an Sekundärphase zugegeben wird.

4. Verfahren nach einem der Ansprüche 1 bis 3, **dadurch gekennzeichnet, dass** zur Unterstützung der Granulatherstellung und Formgebung abgestimmte organische Bindemittel mit abgestimmter unterschiedlicher Löslichkeit verwendet werden wie Polymere, vorzugsweise Polyvinylalkohol.

5. Verfahren nach einem der Ansprüche 1 bis 4, **dadurch gekennzeichnet, dass** organische temporäre Porosierungsmittel zugegeben werden wie Stärken, Cellulose, Polymere.

6. Verfahren nach Anspruch 5, **dadurch gekennzeichnet, dass** Porvsierungsmittel mit einer Teilchengröße von 1 µm bis 500 µm zugegeben werden.

7. Verfahren nach einem der Ansprüche 5 oder 6, **dadurch gekennzeichnet, dass** mindestens zwei in Größe und Morphologie unterschiedliche Porosierungsmittel kombiniert werden.

8. Verfahren nach einem der Ansprüche 1 bis 7 **gekennzeichnet durch** Ausheizen der temporären Porosierungsmittel bei niedrigen Temperaturen und Verfestigung der Preform **durch** die anorganische Beschichtung.

9. Verfahren nach einem der Ansprüche 1 bis 8, **dadurch gekennzeichnet, dass** die Infiltration der Preform erfolgt mit speziellen Infiltrationsverfahren, vorzugsweise der Gasdruckinfiltration, oder mit üblichen Verfahren, vorzugsweise dem Druckguss.

10. Verfahren nach einem der Ansprüche 1 bis 9, **dadurch gekennzeichnet, dass** erforderlichenfalls eine mechanische Bearbeitung der aus dem Verbundwerkstoff hergestellten Formkörper mit gängigen Werkzeugen unter üblichen Bedingungen auf Grund der noch erhaltenen positiven metallischen Eigenschaften erfolgt.

## Claims

1. Process for the preparation of a composite for the production of mouldings, wherein one or more secondary phases consisting of metals, oxides, carbides, borides, nitrides, silicides and combinations thereof are inserted into a matrix consisting of the metals aluminium, magnesium, titanium and alloys thereof with other metals, the particle size of at least one secondary phase ranging from 5 to 500 nanometres, and the secondary phase being deposited as particles in the nanometre range onto a coarser secondary phase and/or the porosity agent by means of spray granulation.

2. Process according to Claim 1, **characterized in that** at least one secondary phase consisting of particles in the conventional size range of 1 to 50 µm is also added.

3. Process according to Claim 1 or 2, **characterized in that** a proportion of 20 to 80 vol.% of secondary phase is added.

4. Process according to one of Claims 1 to 3, **characterized in that** organic binders suitable for assisting the granulation and moulding operations, with a suitable variable solubility, such as polymers, preferably polyvinyl alcohol, are used.

5. Process according to one of Claims 1 to 4, **characterized in that** temporary organic porosity agents, such as starches, cellulose and polymers, are added.

6. Process according to Claim 5, **characterized in that** porosity agents with a particle size of 1 µm to 500 µm are added.

7. Process according to Claim 5 or 6, **characterized in that** at least two porosity agents differing in size and morphology are combined.

8. Process according to one of Claims 1 to 7, **characterized in that** the temporary porosity agents are driven out by heating at low temperatures and the preform is consolidated by the inorganic coating.

9. Process according to one of Claims 1 to 8, **characterized in that** the infiltration of the preform is carried out by special infiltration methods, preferably gas pressure infiltration, or by conventional methods, preferably pressure casting.

10. Process according to one of Claims 1 to 9, **characterized in that**, if necessary, the mouldings made of the composite are machined with common tools under conventional conditions, retaining the positive metallic properties.

## Revendications

1. Procédé de production d'un matériau composite pour la fabrication de corps façonnés, dans lequel, au sein d'une matrice constituée de métaux choisis parmi l'aluminium, le magnésium, le titane et leurs alliages avec d'autres métaux, on incorpore une ou plusieurs phases secondaires constituées de métaux, d'oxydes, de carbures, de borures, de nitrures, de siliciures ou de combinaisons de ces substances, les particules d'au moins une phase secondaire ont une taille de 5 à 500 nanomètres, et l'on produit un dépôt de la phase secondaire formée de particules de la taille du nanomètre, sur une phase secondaire plus grossière et/ou l'agent de porosité, par granulation par pulvérisation.

2. Procédé selon la revendication 1, **caractérisé en ce que** l'on ajoute en outre au moins une phase secondaire constituée de particules dont la taille appartient à l'intervalle classique allant de 1 à 50 µm.

3. Procédé selon la revendication 1 ou 2, **caractérisé en ce que** l'on ajoute une fraction de 20 à 80 % en volume de phase secondaire.

4. Procédé selon l'une des revendications 1 à 3, **caractérisé en ce que**, pour favoriser la formation des granules et le façonnage, on utilise des liants organiques coordonnés présentant des solubilités coordonnées différentes, tels que des polymères et de préférence du poly(alcool vinylique).

5. Procédé selon l'une des revendications 1 à 4, **caractérisé en ce que** l'on ajoute des agents de porosité organiques temporaires, tels que des amidons, de la cellulose ou des polymères.

6. Procédé selon la revendication 5, **caractérisé en ce que** l'on ajoute des agents de porosité dont les particules ont une taille de 1 µm à 500 µm.

7. Procédé selon la revendication 5 ou 6, **caractérisé en ce que** l'on combine au moins deux agents de porosité de tailles et de morphologies différentes.

8. Procédé selon l'une des revendications 1 à 7, **caractérisé par** le chauffage des agents de porosité temporaires à basse température, et le durcissement de l'ébauche par le revêtement minéral.

9. Procédé selon l'une des revendications 1 à 8, **caractérisé en ce que** l'infiltration dans l'ébauche est réalisée à l'aide de procédés d'infiltration spécifiques, de préférence, l'infiltration sous pression de gaz, ou à l'aide de procédé courants, de préférence, la coulée sous pression.

10. Procédé selon l'une des revendications 1 à 9, **caractérisé en ce qu'**un travail mécanique du corps façonné, produit à partir du matériau composite, est réalisé, si nécessaire, à l'aide d'outils courants et dans des conditions usuelles, en raison de la conservation de propriétés métalliques favorables.
